# EUROPEAN PATENT SPECIFICATION

(11) **EP 0 724 167 B1**
(45) Date of publication and mention of the grant of the patent: **09.04.1997**
(21) Application number: 95200170.9
(22) Date of filing: 25.01.1995
(51) Int. Cl.: G01T 1/29, G03B 42/02, H04N 5/32, H05G 1/26

(54) **Method for quality assurance in digital radiography**
Verfahren zur Qualitätssicherung von digitalen Röntgenaufnahmen
Procédé pour assurer la qualité de radiographies numériques

(43) Date of publication of application: 31.07.1996
(73) Proprietor: AGFA-GEVAERT naamloze vennootschap, B-2640 Mortsel (BE)
(72) Inventor: Jacobs, Walter c/o Agfa-Gevaert N.V.,DIE 3800, B-2640 Mortsel (BE); Vuylsteke, Pieter c/o Agfa-Gevaert N.V.,DIE 3800, B-2640 Mortsel (BE)

(56) References cited:
- US-A- 4 400 827
- US-A- 4 952 805
- US-A- 5 276 726
- MEDICAL PHYSICS, vol. 21, no. 4, April 1994, New York US, pp. 509-516; U. NEITZEL et al.: 'Image quality of a digital chest radiography system based on a selenium detector'
- THE BRITISH JOURNAL OF RADIOLOGY, vol. 60, no. 718, October 1987, London GB, pp. 1001-1009; A.R. COWEN et al.: 'A Set of X-ray test objects for image quality control in digital subtraction fluorography. I: Design consideration'
- MEDICAL PHYSICS, vol. 17, no. 3, May 1990, New York US, pp. 454-459; C.E. FLOYD et al: 'Quantitative radiographic imaging using a photostimulable phosphor system'
- RADIOLOGY, vol. 186, no. 2, February 1993, New York US, pp. 395-398; H.G. CHOTAS et al.: 'Digital chest radiography with photostimulable storage phosphors: Signal-to-noise ratio as a function of kilovoltage with matched exposure risk'
- MEDICAL PHYSICS, vol. 2, no. 1, January 1975, New York US, pp. 5-8; Pei-Jan Paul LIN : 'Penetration quality measurement for standardization of radiographic image quality'

## Description

### 1. Field of the invention.

The present invention relates to quality assurance performed in the field of digital radiography.

The invention more specifically relates to the verification of the contrast and noise performance, the dynamic range and the sensitivity of a system for reading a radiation image stored in a photostimulable phosphor screen.

### 2. Description of the prior art.

In the field of digital radiography a wide variety of image acquisition techniques have been developed that render a digital representation of a radiation image.

In one of these techniques a radiation image, for example an x-ray image of an object, is stored in a screen comprising a photostimulable phosphor such as one of the phosphors described in European patent application 503 702 published on 16.09.92.

In a read out station the stored radiation image is read by scanning the screen with stimulating radiation such as laser light of the appropriate wavelength, detecting the light emitted upon stimulation and converting the emitted light into a digital signal representation.

After read-out the residual image left on the photostimulable phosphor screen is erased so that the screen is again available for exposure.

Since the image is available in a digital form, it can be subjected to various kinds of digital image processing techniques for the purpose of enhancing the image quality.

The original or enhanced image can then be transmitted to a hard copy recorder for reproduction of the image on the film size and lay-out of the radiologist's choice and/or it can be applied to a monitor for display.

The advantage of digital radiography resides i.a. in the fact that the image quality can be enhanced by processing the digital image representation.

However, all efforts put into image enhancement and optimization are limited in value when there is no assurance that the performance of the applied image acquisition technique is reliable and that occasional fluctuations of the set up of the read out system remain between acceptable limits.

Therefore there is a need for regular verification and monitoring of various aspects of the performance of the read out apparatus.

This issue has already been addressed in the state of the art disclosures that are mentioned hereafter.

In the article "Photostimulable Phosphor System Acceptance Testing" disclosed in the proceedings of the summer school 1991 held at the University of California, Santa Cruz between July 15 and July 19, 1991 some test procedures for read out apparatus of the above named kind are described.

Further the article "Optimization and quality control of computed radiography" by C.E. Willis et al.; the contents of which has been disclosed at the Radiological Society of North America 1993 Annual Meeting relates to quality assurance procedures for computed radiography systems.

In a workshop on "Test phantoms and optimisation in diagnostic radiology and nuclear medicine" held in Würzburg, Germany on June 15-17, 1992 one embodiment of a test object and a test procedure has been presented by Agfa-Gevaert N.V. The way in which test data are gathered, processed, interpreted and used to adjust the read out apparatus, has not been disclosed.

One of the elements that needs to be verified on a regular basis is the contrast performance of the read out system. Contrast performance is commonly assessed by evaluating the signal-to-noise ratio and the dynamic range of the system for a set of different signal values.

Another characteristic of the performance of a read out device that needs regular checking is the sensitivity.

Generally, verification of system parameters of a photostimulable phosphor read out system as described higher, is performed by evaluating the X-ray image of a so-called measurement phantom.

Such a test phantom commonly consists of an X-ray transparent substrate into which X-ray opaque items are embedded.

Phantoms exist or can be produced that are suitable for verification of a number of parameters.

### 3. Objects of the invention

It is an object of the present invention to provide a method for monitoring the performance of a system for reading a radiographic image stored in a photostimulable phosphor screen.

More specifically, it is an object of the present invention to provide a method for monitoring the contrast/noise performance of such a system and for controlling and adjusting system components and/or parameters that have an influence on the contrast/noise performance.

It is a further object to provide a method for additionally verifying and controlling the dynamic range of a read out system.

It is a further object to provide a method for verifying and controlling the sensitivity of a read out system.

It is a further object to provide a system that automatically performs such evaluation without requiring any intervention of an operator.

Further objects will become apparent from the description hereafter.

### 4. Statement of the invention

The objects of the present invention are achieved by a method of monitoring the contrast performance of a system for reading an X-ray image stored in a photostimulable phosphor screen, comprising the steps of
(i) exposing a photostimulable phosphor screen through a phantom to X-rays, said phantom comprising a step wedge of X-ray attenuating material,
(ii) scanning by means of stimulating irradiation at least a part of said screen comprising an image of said step wedge,
(iii) detecting light emitted upon stimulation and converting detected light into electric signal values representing an image of at least said phantom,
(iv) calculating for each step of the step wedge an average value SAL of signal values pertaining to the X-ray image of a step under consideration,
(v) determining for each step a noise value N by performing the steps of
   - for all pixels i in said step calculating the square value of the difference of the signal value of a pixel i and the average of the signal values of pixels in a window of predetermined dimensions around said pixel i,
   - adding up said square values for all pixels i in a step and dividing the square root of the sum of said square values by the number of pixels in the step,
(vi) determining the signal-to-noise ratio SNR for each step according to the equation 10 log (SAL/N),
(vii) determining for each step the difference of the determined signal-to-noise ratio and an expected value of the signal-to-noise ratio,
(viii) generating a visible image comprising for each step of the wedge a graphical representation of the difference of the determined signal-to-noise ratio and an expected value hereof, said graphical representation of the difference being positioned relative to a corresponding minimum and maximum acceptance value,
(ix) evaluating on said visible image for each step whether the corresponding difference falls within an acceptance range defined by said minimum and maximum acceptance values and,
(x) adjusting the read out system in case said difference does not fall within said acceptance range.

To monitor the sensitivity of a read out system for reading a radiation image stored in a photostimulable phosphor screen, the method of the present invention comprises the additional steps of
(i) calculating for each step the difference of the determined SAL value and an expected average value of signal values pertaining to an image of a step of the wedge,
(ii) generating a visible image comprising a graphical representation of the difference of the determined SAL value and the expected average value of signal values pertaining to each step of the wedge, said difference being positioned relative to corresponding minimum and maximum acceptance values,
(iii) evaluating on said visible image for each step whether the calculated difference falls within the range of minimum to maximum acceptance values and
(iv) adjusting the read out system in case said difference does not fall within said range.

In a particular embodiment the dynamic range of the system is additionally determined and compared with an acceptance value. The dynamic range is determined as the ratio between SAL values pertaining to the step with minimum thickness of X-ray attenuating material and the step with the largest thickness of X-ray attenuating material.

In a specific embodiment the electric signal value, the detected light is converted into, is a signal value that is proportional to the square root of the exposure values. Square root conversion of signal values is advantageous from the viewpoint of image compression. However, the method of the present invention can also be applied to non-compressed signal values or to signal values that are subjected to another type of signal compression.

After read out of an image, signal values pertaining to said image are stored in memory.

For the purpose of processing signal values of a specific step of the step wedge, it is necessary to be able to identify which signal values pertain to said step and to retrieve them from memory.

Signal values pertaining to the image of a specific step are identified by means of data that indicate the position of the image of the step wedge and of each of the steps of the wedge individually. These data are determined and stored in the memory of the read out system in advance.

Markers or aligning means may be used to provide that the phantom is in a fixed position relative to the cassette so that the location of the image of the phantom (or at least of the wedge) is known in advance and can be stored and recalled when running a test procedure for monitoring the contrast performance of the system.

Suitable identification data may for example be the coordinates of the corner points of the image of each of the steps in the phantom image relative to a predefined coordinate system and the dimensions of the steps. By means of these data the position of the image of a step can be determined and pixel values pertaining to a step can be selected and processed.

Alternatively, detection of the image of the phantom can also be performed automatically by application of pattern recognition techniques to the image stored in the photostimulable phosphor screen.

In one embodiment the procedure for monitoring the contrast performance of the read out system is identified at an identification station.

Upon selection of a test menu a key indicative of said test menu is written into a means identifying a photostimulable phosphor screen. The read out system is then provided with means for reading the key and for processing of an image read out of a phosphor screen to which said key has been associated according to said test program.

It is most convenient to use an electronic identification device for identification of a photostimulable phosphor screen such as a semiconductor memory, e.g. an electrically erasable programmable read only memory (EEPROM) that can be provided on a cassette conveying a photostimulable phosphor screen. A cassette with such a memory means has been described in extenso in EP 307 760. The embodiment wherein the cassette comprises an EEPROM is advantageous because the information in the EEPROM can be erased so as to be reusable and/or it can be updated so that it can for example comprise a number that indicates the number of times a cassette has been exposed.

Other identification means that enable identification of a test program to be applied to the image stored in a photostimulable phosphor screen, are possible. For example a bar code (e.g. on a label that is mountable to the cassette) or other kinds of semiconductor memories are suitable alternatives.

In this invention an x-ray image of a phantom comprising a step wedge of X-ray opaque material is stored in a photostimulable phosphor screen.

Such step wedges are known in the art of radiography and are for example described in "SPSE Handbook of Photographic Science and Engineering, W. Thomas, 1973, page 799".

In a specific embodiment the phantom comprises a step wedge composed of a number of areas of different thickness of an x-ray opaque material, the thickness within each area being constant.

Suitable x-ray opaque materials are copper, lead, tin, aluminum etc.

Preferably the step wedge is covered and surrounded by an X-ray opaque material such as a lead layer of known thickness, in order to avoid that scatter radiation might negatively influence the measurement results and in order to obtain a dynamic range of 500:1.

The noise value N is determined on the basis of a local average of pixel values in a window of predetermined dimensions. More specifically, for all pixels i in a step of the wedge under consideration, the sum is calculated of the square value of the difference of the signal value of a pixel i and the average of the signal values of pixels in a window of predetermined dimensions around said pixel i. Then, the square root of this sum is divided by the number of pixels in a step.

By varying the dimensions of the window surrounding a pixel under consideration, the minimum frequency of noise that is taken into account can be changed. In this way, the effect of noise below a certain frequency can be eliminated.

When the entire noise spectrum is taken into account, the dimensions of the window are chosen to be identical to the dimensions of a step of the step wedge.

When the effect of low frequency noise is to be eliminated, the predetermined dimensions of the windows need to be such that low frequency variations do not occur in such a window so the dimensions of the windows are small relative to the dimensions of a step of the step wedge.

The method comprises a step of generating a visual image comprising for each step a graphical representation of the difference of the determined signal-to-noise ratio and an expected value of the signal-to-noise ratio.

In a specific embodiment also a visual image of the step wedge is generated.

The data representing the measured results (and the signal values representing the image of the phantom) are for example sent to a hard copy recorder to generate a photographic reproduction of the image of the phantom and a representation of the measurement results.

The visual representation of the difference between calculated and expected signal-to-noise ratio is positioned relative to acceptance values so as to provide easy and quick evaluation by an operator.

Preferably a hard copy is generated of the visual representation of the measurement results so that a quality record of the performance of the system can be kept with the read out apparatus. However, alternatively a visible soft copy image can be produced on the screen of a monitor.

The method comprises a procedural step of monitoring for each step of the step wedge whether the difference of the calculated signal-to-noise ratio and the expected signal-to-noise ratio falls within a predefined acceptance range. The result of this verification is used to guide a technician when adjusting components of the read out device in case the difference of calculated signal-to-noise value and expected signal-to-noise value for a specific step deviates from the predefined acceptance values.

When said difference of calculated signal-to-noise value and expected signal-to-noise value is lower than the expected difference for a specific step, this may have been caused by irregular operation of the read out system, for example irregular operation of the opto-electric transducer (used for converting light emitted upon stimulation into an electric signal), the optical system used for directing light and focusing light, the output of the source of stimulating light, a signal amplifier, an analog-to-digital convertor etc.

When the signal-to-noise ratio is smaller than a predefined acceptance value, the operation and adjustments of the components of the read out system are checked and if necessary, re-adjusted.

Adjustments are performed until the difference of calculated signal-to-noise ratio and expected signal-to-noise ratio falls again within the predefined acceptance range.

In addition to the image of the step wedge a visual representation can be produced of the sensitivity shift, being the difference between calculated average signal level and an expected average value of signal values pertaining to a step, for each step of the step wedge. To this visualisation the acceptance values are added so as to provide an easy and quick evaluation.

The hard copy is preferably provided with a text window wherein a system identifier, the date the measurement is performed, the cassette format, the image screen type etc. can be visualized in addition to specific measurement data such as the dynamic range of the system, the SAL value, the sensitivity shift and the signal-to-noise ratio at least for one specific step.

It is also advantageous to store the measured results in the memory of the read out apparatus so as to have a retrievable record on the performance of the read out apparatus.

### Brief description of the drawings

Particular aspects of the present invention as well as preferred embodiments thereof will be illustrated by means of the following drawings in which
Fig. 1 is a general view of a system in which the method of the present invention can be applied,
Fig. 2 is a detailed view of a system for reading an image stored in a photostimulable phosphor screen,
Fig. 3 shows the lay-out of a hard copy image that is generated of the step wedge and the measurement results.

### Detailed description

The contrast response and the sensitivity of a system for reading an X-ray image stored in a photostimulable phosphor screen is verified by exposing a combination of a so-called contrast measurement phantom and a photostimulable phosphor screen to X-rays, reading the image of the phantom by means of the photostimulable phosphor read out system and by processing the read out data.

Next, a visual representation of the measurement results is generated and an evaluation of the contrast response and the sensitivity of the read out system is performed on that visual image. If the result of evaluation reveals that the contrast response and/or sensitivity is unsatisfactory, system components are adjusted.

The contrast measurement phantom used in the described embodiment of the invention consists of a step wedge of the following dimensions: 70 mm x 250 mm. The step wedge comprises a total of 10 steps. Each of the steps individually has uniform thickness of copper. The thickness of the different steps relative to each other however increases so as to cover a dynamic range of signal values of approximately 500:1.

For the purpose of eliminating the influence of scatter radiation on the measurement results the step wedge was surrounded by a lead layer of 1 mm thickness for all steps and an additional layer of 2 mm thickness for steps 7 to 10. (Steps are numbered in the direction of augmenting thickness so that steps 7-10 are steps where the signal values are small relative to the signal values pertaining to steps 1 to 7). Also for the purpose of scatter elimination the step wedge was surrounded by a lead layer.

An overlap has been foreseen of 10 mm on both sides of the wedge and step 10 (least sensitive step) has also an overlap of 10 mm lead at the bottom side to avoid scatter from the lateral direction.

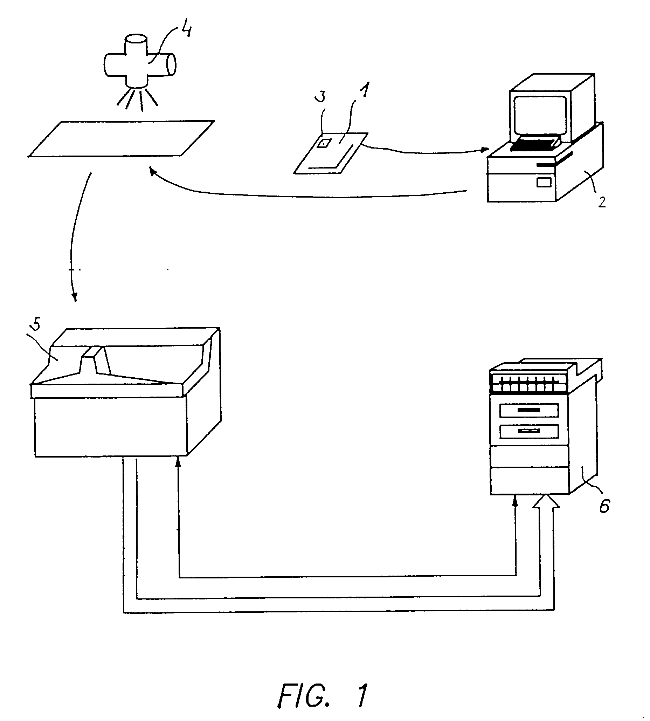

The test procedure starts by identifying a cassette conveying an un-exposed photostimulable phosphor screen, indicated by numeral (1) in figure 1, in an identification station (2).

The cassette is provided with an electrically erasable programmable read only memory (3) (EEPROM). In the identification station various kinds of data such as data relating to the read out conditions and/or data relating to the signal processing that is to be applied and/or to the destination of an image after read-out can be written into the EEPROM.

The cassette is fed into the identification station and from a number of available processing menu's that are displayed on the display screen of the identification station, a contrast evaluation test menu is selected. Then an identifier indicative of this menu item is written onto the EEPROM.

Next an exposure step is performed. (It will be evident that it is also possible to perform the exposure prior to the identification).

For this purpose, the measurement phantom is positioned on top of a cassette conveying an unexposed photostimulable phosphor screen.

The combination of photostimulable phosphor screen and phantom on top of the screen is then exposed to x-rays emitted by an x-ray source (4) under calibrated and reproducible exposure conditions.

The correct position of the phantom is obtained by guiding means that serve to align the phantom with the cassette conveying the photostimulable phosphor screen.

For this purpose the phantom is provided with a number of recesses into which a cassette conveying a photostimulable phosphor screen can be positioned. For each cassette format a corresponding recess is provided.

Alternative ways of aligning phantom and cassette may be envisioned such as an assembly of pins and markers.

The exposed photostimulable phosphor screen is next fed into a read-out apparatus (5) for reading the radiation image of the phantom.

First the information stored in the EEPROM is read. In this way a test procedure is identified so that the image that will be read out is identified as a phantom image and will be analyzed according to a dedicated measurement procedure. Parameters to be used during execution of this dedicated measurement procedure are identified and can be retrieved from the system disc where they were stored in advance.

Next, the scanning and read out operation of the read out apparatus is started.

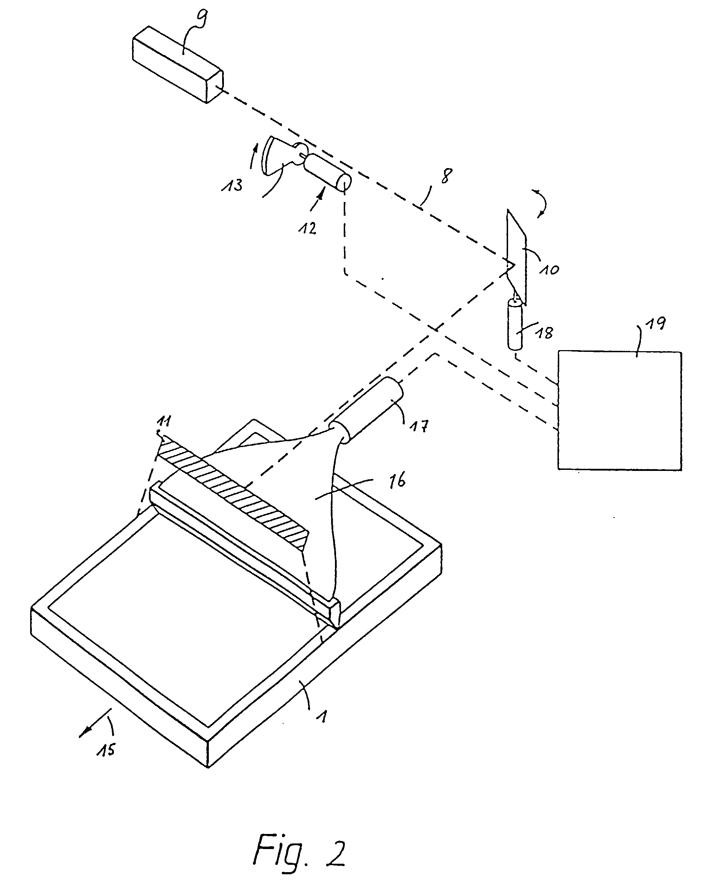

A simplified diagram illustrating the operation of the read-out apparatus is shown in figure 2.

Read-out of an image stored in a photostimulable phosphor screen is performed by scanning the screen by means of a stimulating light beam (8) emitted by a light source (9) emitting light of a wavelength within the stimulating wavelength range of the phosphor used. For example a HeNe laser emitting at 633 nm is used.

A fast scan movement is obtained by directing the light beam emitted by a laser towards an oscillating scan mirror (10) that is driven by a galvanometer. Computer (19) and drive means (18) control the galvanometer movement under control of a triangular wave pattern.

A light chopper (12) with a rotating disc segment (13) is positioned in the laser beam path during the galvanometer retrace step.

Various laser beam focusing devices such as an F-theta lens, can be used to ensure a uniform beam diameter during scanning of the beam on the phosphor sheet and also ensure that the uniform angular velocity of the reciprocating mirror results in the laser spot travelling across the phosphor sheet at a uniform linear speed.

The laser beam is one-dimensionally deflected in a line direction by the galvanometer mirror (10) and a plane reflection mirror (11). The movement of the laser beam in the line direction is commonly referred to as fast scan movement.

The slow scan movement, i.e. the movement in a direction perpendicular to the fast scan movement, is provided by means of transport means that transport the screen at a uniform speed of in a direction perpendicular to the main scan direction to enable the whole sheet to be scanned in a uniform manner (direction of arrow 15).

Positioned close to, but behind the scanning line of the laser beam on the phosphor sheet, is a light guide (16) that receives light emitted from the phosphor sheet but is shielded from direct exposure to the laser beam. The output end of the light guide is positioned adjacent a photo-detector (17), which produces an electrical signal dependent upon the light intensity falling there on.

Suitable electrical connections are made to pass the output signal from the photo-detector to a computer (19). This computer serves to control the light chopper (12) and the galvanometer mirror drive (18).

A sample and hold circuit (not shown), a square root amplifier (not shown) and an analog-to-digital converter (not shown) are provided to convert the electric signal into a digital image signal that is proportional to the square root of irradiation values.

The digital image signal is then fed to an image processing module of the read-out apparatus where it is stored in the system's storage disc (image procesing module and storage disc are not shown).

The next step is the analysis of the digital (non-processed) image of the measurement phantom.

On the basis of the coordinate values of the corner points of each of the steps of the wedge which are retrieved from the memory of the read out device when running the contrast measurement program, the signal values pertaining to a specific step are identified and retrieved from memory.

Then, for each step of the step wedge an average value SAL of signal values within a considered step is calculated.

Next, for each step the noise value N is determined by performing the steps of
- for all pixels i in said step calculating the square value of the difference of the signal value of a pixel i and the average of the signal values of pixels in a window of predetermined dimensions around said pixel i,
- summing up said square values for all pixels i in a step and dividing the square root of the sum of said square values by the number of pixels in the step.

A window in this embodiment comprises 15 x 15 pixels. The number of pixels in a step is approximately 250 x 150.

The signal-to-noise value for a specific step is then calculated according to the equation 10 log (SAL/N). The signal-to-noise value is expressed in decibel.

For each of the steps an expected value of the signal-to-noise value has been stored in advance. Upon running the test program for contrast verification, these signal values are addressed and retrieved from memory and the difference of the determined signal-to-noise ratio and the expected value is calculated.

For each step it was evaluated on the hard copy image the generation of which is described further on, whether or not the difference between expected and calculated signal-to-noise ratio fell within an acceptance range. A margin of 1 dB is acceptable for reliable operation of the read out device.

Further, the difference was calculated for each step between the determined average signal level SAL and an expected average signal value that was determined in advance for each step and that was stored in the memory of the read out device and recalled when running the measurement program.

For each step it is evaluated on the hard copy image, the generation of which is described further on, whether this difference, referred to as sensitivity shift, falls within a range between a minimum and a maximum acceptance value of 0.05.

A hard copy image was generated by means of a laser recorder (6, fig.1) of (i) the image (30) of the step wedge, (ii) the sensitivity shift and (iii) the difference between actual and expected value of the signal-to-noise ratio.

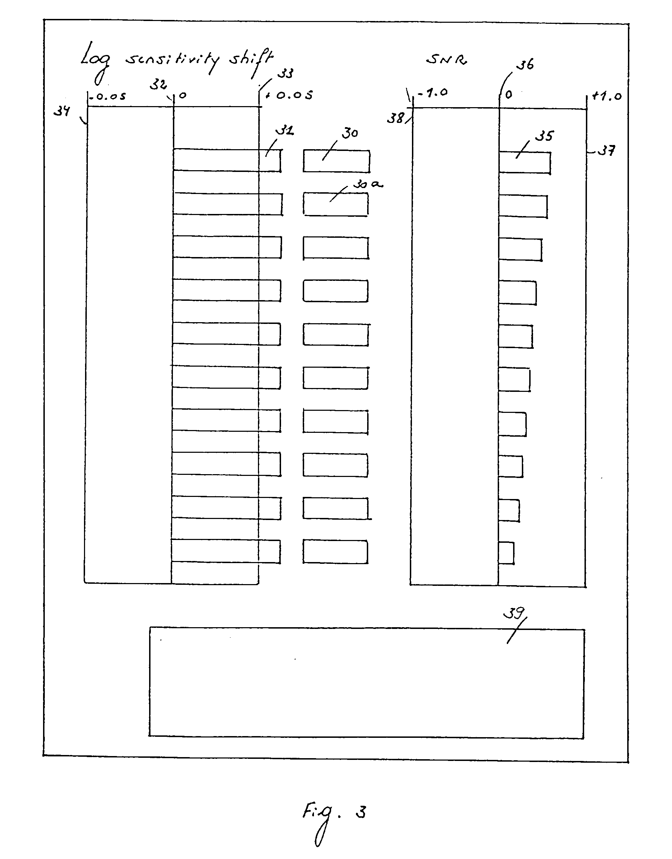

The lay-out of the hard copy is shown in figure 3.

In the middle of the reproduction an image (30) is generated of the step wedge. In this figure steps (30a) are represented as blocks of uniform density, however it will be clear that in reality these blocks have a different density depending on the thickness of X-ray attenuating material in each of the steps.

The sensitivity shift (difference between actual sensitivity and expected sensitivity value) is represented for each step by a bar the horizontal dimension of which is related to the value of the sensitivity shift. The bar starts at a vertical reference line (32) representing zero shift (actual sensitivity value equal to expected sensitivity value) and has a horizontal dimension that is related to the actual value of the sensitivity shift. Vertical lines (33) and (34) show the acceptance margins of plus and minus 0.05.

The difference of actual signal-to-noise ratio and the expected value for the signal-to-noise ratio is for each step represented by a bar (35) starting from a position (36) where the signal-to-noise value is equal to the expected signal-to-noise value and having a horizontal dimension that is related to the calculated difference. Vertical lines (37) and (38) indicate the plus and minus 1 dB acceptance levels.
In this way an operator can immediately see whether or not the difference is acceptable.

In case the calculated signal-to-noise ratio differs more than 1 dB from the expected value of the signal-to-noise value, the operation of the read out apparatus checked. More specifically, the output of the stimulating light source and the performance of the optical components of the read out system are checked to see whether the operation of these devices is in accordance with the specifications. For example, dust on a light guiding mirror might have an influence on the proper device operation.

Adequate adjustments by the service technician or cleaning of the device components are then performed to bring the difference between expected signal-to-noise ratio and actual signal-to-noise ratio again between acceptable limits.

Similarly, if the sensitivity shift exceeds the acceptance margin of 0.05, the operation of the read out device and more specifically of the electronic components such as the analog-to-digital convertor is checked and, if necessary, adjusted or replaced.

The hard copy image additionally comprises a text window (39) wherein the type of phosphor screen, the date the measurement is performed, an identifier of the read out system and a cassette format are printed.

Additionally the following numerical values as well as corresponding acceptance levels are printed: the dynamic range of the read out system, and with respect to one step of the wedge (for example step 2) the average signal level SAL, the sensitivity shift and the signal-to-noise ratio.

For each analyzed phantom image a report file is created which contains all the above data. These report files are stored on the system hard disk of the readout system. In the course of a service intervention the service technician can make a copy of these files onto a portable personal computer for archival in an electronic database. This way a historical overview of the status of individual machines can be maintained at the service department. Also statistics can be gathered concerning the accuracy of all installed machines.

## Claims

1. A method of monitoring the contrast performance of a system for reading an X-ray image stored in a photostimulable phosphor screen, comprising the steps of
(i) exposing a photostimulable phosphor screen through a phantom to X-rays, said phantom comprising a step wedge of X-ray attenuating material,
(ii) scanning by means of stimulating irradiation at least a part of said screen comprising an image of said step wedge,
(iii) detecting light emitted upon stimulation and converting detected light into electric signal values representing an image of at least said phantom,
(iv) calculating for each step of the step wedge an average value SAL of signal values pertaining to the X-ray image of a step under consideration,
(v) determining for each step a noise value N by performing the steps of
- for all pixels i in said step calculating the square value of the difference of the signal value of a pixel i and the average of the signal values of pixels in a window of predetermined dimensions around said pixel i,
- adding up said square values for all pixels i in a step and dividing the square root of the sum of said square values by the number of pixels in the step,
(vi) determining the signal-to-noise ratio SNR for each step as 10 log (SAL/N),
(vii) determining for each step the difference of the determined signal-to-noise ratio and an expected value of the signal-to-noise ratio,
(viii) generating a visible image comprising for each step of the wedge a graphical representation of the difference of the determined signal-to-noise ratio and an expected value hereof, said graphical representation of the difference being positioned relative to a corresponding minimum and maximum acceptance value,
(ix) evaluating on said visible image for each step whether the corresponding difference falls within an acceptance range defined by said minimum and maximum acceptance values and,
(x) adjusting the read out system in case said difference does not fall within said acceptance range.

2. A method according to claim 1 wherein
- for each step the difference is calculated of the average value SAL of signal values pertaining to an image of a step under consideration and a corresponding expected average signal value,
- a visual image is generated representing for each step the difference of the determined SAL value and the expected average value of signal values, said difference being positioned relative to corresponding minimum and maximum acceptance values,
- evaluating for each step whether the corresponding difference falls within the range of minimum to maximum acceptance values and adjusting the read out system in case said difference does not fall within said range.

3. A method according to claim 1 wherein
- a dynamic range value is determined as the ratio of an SAL value calculated in respect of a step of the step wedge having the largest amount of X-ray attenuating material and an SAL value calculated in respect of the step of the step wedge having the smallest amount of X-ray attenuating material,
- said calculated dynamic range value is compared with an expected dynamic range value,
- if the calculated dynamic range value differs from the expected dynamic range value the read out system is adjusted.

4. A method according to claim 1 wherein said electric signal values are proportional to the square root of exposure values.

5. A method according to claim 1 wherein an identifier identifying a test procedure for contrast monitoring is written onto a memory device provided on a cassette conveying said photostimulable phosphor screen and wherein upon reading said identifier when said cassette is fed into the read out device, steps (iv) to (viii) are performed.

6. A, method according to claim 5 wherein additionally the following steps are performed:
- for each step the difference is calculated of the average value SAL of signal values pertaining to an image of a step under consideration and a corresponding expected average signal value,
- a visual image is generated representing for each step the difference of the determined SAL value and the expected average value of signal values, said difference being positioned relative to corresponding minimum and maximum acceptance values,
- evaluating for each step whether the corresponding difference falls within the range of minimum to maximum acceptance values and adjusting the read out system in case said difference does not fall within said range.

7. A method according to claim 5 wherein additionally the following steps are performed:
- a dynamic range value is determined as the ratio of an SAL value calculated in respect of a step of the step wedge having the largest amount of X-ray attenuating material and an SAL value calculated in respect of the step of the step wedge having the smallest amount of X-ray attenuating material,
- said calculated dynamic range value is compared with an expected dynamic range value,
- if the calculated dynamic range value differs from the expected dynamic range value the read out system is adjusted.

8. A method according to claim 5 wherein said memory device is an electrically erasable programmable read only memory.

## Patentansprüche

1. Verfahren zur Überwachung des Kontrastverhaltens eines Systems zum Lesen eines in einem fotostimulierbaren Leuchtschirm gespeicherten Röntenbildes, mit folgenden Schritten:
(i) Belichten eines fotostimulierbaren Leuchtschirms durch ein Phantom mit Röntgenstrahlen, wobei das besagte Phantom einen Graukeil aus Röntgendämpfungsmaterial umfaßt,
(ii) Abtasten mittels stimulierender Bestrahlung von mindestens einem Teil des besagten Schirms mit einem Bild des besagten Graukeils,
(iii) Erfassen von bei Stimulierung emittiertem Licht und Umwandeln des erfaßten Lichtes in ein Bild mindestens des besagten Phantoms darstellende elektrische Signalwerte,
(iv) Berechnen, für jede Stufe des Graukeils, eines Durchschnittswertes SAL von Signalwerten in bezug auf das Röntgenbild einer in Betracht gezogenen Stufe,
(v) Bestimmen eines Rauschwertes N für jede Stufe durch Durchführung der folgenden Schritte:
- für alle Bildpunkte i in der besagten Stufe, Berechnen des Quadratwertes der Differenz des Signalwertes eines Bildpunktes i und des Durchschnitts der Signalwerte von Bildpunkten in einem Fenster vorbestimmter Abmessungen um den besagten Bildpunkt i herum,
- Zusammenaddieren der besagten Quadratwerte für alle Bildpunkte i in einer Stufe und Teilen der Quadratwurzel der Summe der besagten Quadratwerte durch die Anzahl von Bildpunkten in der Stufe,
(vi) Bestimmen des Signal-Rauschverhältnisses SNR für jede Stufe als 10 log (SAL/N),
(vii) Bestimmen, für jede Stufe, der Differenz zwischen dem bestimmten Signal-Rauschverhältnis und einem Erwartungswert des Signal-Rauschverhältni; ses,
(viii) Erzeugen eines sichtbaren Bildes, das für jede Stufe des Keils eine graphische Darstellung der Differenz zwischen dem bestimmten Signal-Rauschverhältnis und einem Erwartungswert desselben umfaßt, wobei die besagte graphische Darstellung der Differenz relativ zu einem entsprechenden Mindest- und Höchst-Abnahmewert positioniert wird,
(ix) Auswerten auf dem besagten sichtbaren Bild, für jede Stufe, ob die entsprechende Differenz in einen durch die besagten Mindest- und Höchst-Abnahmewerte definierten Abnahmebereich fällt und
(x) Einstellen des Auslesesystems, wenn die besagte Differenz nicht in den besagten Abnahmebereich fällt.

2. Verfahren nach Anspruch 1, wobei
- für jede Stufe die Differenz zwischen dem Durchschnittswert SAL von ein Bild einer in Betracht gezogenen Stufe betreffenden Signalwerten und einem entsprechenden erwarteten Durchschnittssignalwert berechnet wird,
- ein sichtbares Bild erzeugt wird, das für jede Stufe die Differenz zwischen dem bestimmten SAL-Wert und dem erwarteten Durchschnittswert von Signalwerten darstellt, wobei die besagte Differenz relativ zu entsprechenden Mindest- und Höchstannahmewerten positioniert wird,
- Auswerten für jede Stufe, ob die entsprechende Differenz in den Bereich von Mindest- zu Höchstannahmewerten fällt, und Einstellen des Auslesesystems, wenn die besagte Differenz nicht in den besagten Bereich fällt.

3. Verfahren nach Anspruch 1, wobei
- ein Dynamikbereichswert als das Verhältnis zwischen einem hinsichtlich einer Stufe des Graukeils mit der größten Menge an Röntgendämpfungsmaterial berechneten SAL-Wert und einem hinsichtlich der Stufe des Graukeils mit der geringsten Menge an Röntgendämpfungsmaterial berechneten SAL-Wert bestimmt wird,
- der besagte berechnete Dynamikbereichswert mit einem erwarteten Dynamikbereichswert verglichen wird,
- wenn sich der berechnete Dynamikbereichswert von dem erwarteten Dynamikbereichswert unterscheidet, das Auslesesystem eingestellt wird.

4. Verfahren nach Anspruch 1, wobei die besagten elektrischen Signalwerte proportional zur Quadratwurzel von Belichtungswerten sind.

5. Verfahren nach Anspruch 1, wobei eine ein Prüfverfahren zur Kontrastüberwachung kennzeichnende Kennung in eine Speichervorrichtung eingeschrieben wird, die auf einer den besagten fotostimulierbaren Leuchtschirm übermittelnde Kassette vorgesehen ist, und wobei bei Lesen der besagten Kennung bei Einführung der besagten Kassette in die Auslesevorrichtung die Schritte (iv) bis (viii) durchgeführt werden.

6. Verfahren nach Anspruch 5, wobei zusätzlich folgende Schritte durchgeführt werden:
- für jede Stufe wird die Differenz zwischen dem Durchschnittswert SAL von ein Bild einer in Betracht gezogenen Stufe betreffenden Signalwerten und einem entsprechenden erwarteten Durchschnittssignalwert berechnet,
- ein sichtbares Bild wird erzeugt, das für jede Stufe die Differenz zwischen dem bestimmten SAL-Wert und dem erwarteten Durchschnittswert von Signalwerten darstellt, wobei die besagte Differenz relativ zu entsprechenden Mindest- und Höchstannahmewerten positioniert wird,
- Auswerten für jede Stufe, ob die entsprechende Differenz in den Bereich von Mindest- bis Höchstannahmewerten fällt, und Einstellen des Auslesesystems, wenn die besagte Differenz nicht in den besagten Bereich fällt.

7. Verfahren nach Anspruch 5, wobei zusätzlich folgende Schritte durchgeführt werden:
- ein Dynamikbereichswert wird als das Verhältnis zwischen einem hinsichtlich einer Stufe des Graukeils mit der größten Menge an Röntgendämpfungsmaterial berechneten SAL-Wert und einem hinsichtlich der Stufe des Graukeils mit der geringsten Menge an Röntgendämpfungsmaterial berechneten SAL-Wert bestimmt,
- der besagte berechnete Dynamikbereichswert wird mit einem erwarteten Dynamikbereichswert verglichen,
- wenn sich der berechnete Dynamikbereichswert von dem erwarteten Dynamikbereichswert unterscheidet, wird das Auslesesystem eingestellt.

8. Verfahren nach Anspruch 5, wobei die besagte Speichervorrichtung ein elektrisch löschbarer programmierbarer Festwertspeicher ist.

## Revendications

1. Procédé de contrôle de la performance de contraste d'un système de lecture d'une image par rayons X mémorisée dans un écran au phosphore photostimulable, comprenant les étapes de
(i) exposition d'un écran au phosphore photostimulable à travers un fantôme à des rayons X, ledit fantôme comprenant une échelle de gris graduée de matière atténuatrice des rayons X,
(ii) balayage au moyen d'une irradiation stimulante d'au moins une partie dudit écran comprenant une image de ladite échelle de gris graduée,
(iii) détection de la lumière émise à la stimulation et conversion de la lumière détectée en valeurs de signal électrique représentant une image d'au moins ledit fantôme,
(iv) -calcul pour chaque niveau de gris de l'échelle de gris graduée d'une valeur moyenne SAL des valeurs de signal relatives à l'image par rayons X d'un niveau de gris en cours de considération,
(v) détermination pour chaque niveau de gris d'une valeur de bruit N en effectuant les étapes
- pour tous les pixels i dans ledit niveau de gris, de calcul de la valeur carrée de la différence de la valeur de signal d'un pixel i et de la moyenne des valeurs de signal des pixels dans une fenêtre de dimensions prédéterminées autour dudit pixel i,
- d'addition desdites valeurs carrées de tous les pixels i dans un niveau de gris et de division de la racine carrée de la somme desdites valeurs carrées par le nombre de pixels dans le niveau de gris,
(vi) détermination du rapport signal/bruit SNR pour chaque niveau de gris comme 10 log (SAL/N),
(vii) détermination pour chaque niveau de gris de la différence du rapport signal/bruit déterminé et d'une valeur prévue du rapport signal/bruit,
(viii) génération d'une image visible comprenant pour chaque niveau de gris de l'échelle de gris une représentation graphique de la différence du rapport signal/bruit déterminé et d'une valeur prévue de celui-ci, ladite représentation graphique de la différence étant positionnée par rapport à une valeur d'acceptation minimum et une valeur d'acceptation maximum correspondantes.
(ix) évaluation sur ladite image visible pour chaque niveau de gris si la différence correspondante tombe à l'intérieur d'une gamme d'acceptation définie par lesdites valeurs d'acceptation minimum et maximum et,
(x) réglage du système de lecture au cas où ladite différence ne tombe pas à l'intérieur de ladite gamme d'acceptation.

2. Procédé conformément à la revendication 1, dans lequel
- pour chaque niveau de gris la différence de la valeur moyenne SAL dès valeurs de signal relatives à une image d'un niveau de gris en cours de considération et d'une valeur de signal moyenne prévue correspondante est calculée,
- une image visuelle représentant pour chaque niveau de gris la différence de la valeur SAL déterminée et de la valeur moyenne prévue des valeurs de signal est générée, ladite différence étant positionnée par rapport à des valeurs d'acceptation minimum et maximum correspondantes,
- une évaluation pour chaque niveau de gris si la différence correspondante tombe ou non à l'intérieur de la gamme des valeurs d'acceptation minimum à maximum et un réglage du système de lecture au cas où ladite différence ne tombe pas à l'intérieur de ladite gamme.

3. Procédé conformément à la revendication 1, dans lequel
- une valeur de gamme dynamique est déterminée comme le rapport d'une valeur SAL calculée par rapport à un niveau de gris de l'échelle de gris graduée ayant la plus grande quantité de matière atténuatrice des rayons X et une valeur SAL calculée par rapport au niveau de gris de l'échelle de gris graduée ayant la plus petite quantité de matière atténuatrice des rayons X,
- ladite valeur de gamme dynamique calculée est comparée à une valeur de gamme dynamique prévue,
- si la valeur de gamme dynamique calculée diffère de la valeur de gamme dynamique prévue le système de lecture est réglé.

4. Procédé conformément à la revendication 1, dans lequel lesdites valeurs de signal électrique sont proportionnelles à la racine carrée des valeurs d'exposition.

5. Procédé conformément à la revendication 1, dans lequel un identifiant qui identifie une procédure de test pour le contrôle de contraste est écrit sur un dispositif de mémoire fourni sur une cassette portant ledit écran au phosphore photostimulable et dans lequel à la lecture dudit identifiant quand ladite cassette est introduite dans le dispositif de lecture, les étapes (iv) à (viii) sont effectuées.

6. Procédé conformément à la revendication 5, dans lequel en plus les étapes suivantes sont effectuées:
- pour chaque niveau de gris la différence de la valeur moyenne SAL des valeurs de signal relatives à une image d'un niveau de gris en cours de considération et d'une valeur de signal moyenne prévue correspondante est calculée,
- une image visuelle représentant pour chaque niveau de gris la différence de la valeur SAL déterminée et de la valeur moyenne prévue des valeurs de signal est générée, ladite différence étant positionnée par rapport à des valeurs d'acceptation minimum et maximum correspondantes,
- une évaluation pour chaque niveau de gris si la différence correspondante tombe ou non à l'intérieur de la gamme des valeurs d'acceptation minimum à maximum et un réglage du système de lecture au cas où ladite différence ne tombe pas à l'intérieur de ladite gamme.

7. Procédé conformément à la revendication 5, dans lequel en plus les étapes suivantes sont effectuées:
- une valeur de gamme dynamique est déterminée comme le rapport d'une valeur SAL calculée par rapport à un niveau de gris de l'échelle de gris graduée ayant la plus grande quantité de matière atténuatrice des rayons X et une valeur SAL calculée par rapport au niveau de gris de l'échelle de gris graduée ayant la plus petite quantité de matière atténuatrice des rayons X,
- ladite valeur de gamme dynamique calculée est comparée à une valeur de gamme dynamique prévue,
- si la valeur de gamme dynamique calculée diffère de la valeur de gamme dynamique prévue le système de lecture est réglé.

8. Procédé conformément à la revendication 5, dans lequel ledit dispositif de mémoire est une mémoire morte programmable effaçable électriquement.
